# EUROPEAN PATENT SPECIFICATION

(11) **EP 1 527 695 B1**
(45) Date of publication and mention of the grant of the patent: **20.01.2010**
(21) Application number: 03024638.3
(22) Date of filing: 27.10.2003
(51) Int. Cl.: A23F 5/10, A23F 5/46, A23L 1/234, A23F 5/24

(54) **Fermented coffee beverage**
Fermetiertes Kaffeegetränk
Boisson fermentée à base de café

(43) Date of publication of application: 04.05.2005
(73) Proprietor: Nestec S.A., 1800 Vevey (CH)
(72) Inventor: Duboc, Philippe, 8200 Schaffhausen (CH); Milo, Christian, 1066 Epalinges (CH)
(74) Representative: Elleby, Gudrun

(56) References cited:
- EP-A- 0 326 740
- EP-A- 0 791 296
- US-A- 4 867 992
- US-A- 5 008 125
- US-A1- 2002 058 092
- DATABASE FSTA [Online] INTERNATIONAL FOOD INFORMATION SERVICE (IFIS), FRANFURT/MAIN, DE; 1996, ARGAIZ A ET AL: "Quantitative descriptive flavor profile of five brewed Mexican coffees." XP002271954 Database accession no. 97-1-04-h0200 & 1996 DEP. DE INGENIERIA QUIMICA Y ALIMENTOS, UNIV. DE LAS AMERICAS-PUEBLA, STA. CATARINA MARTIR, CHOLULA 72820, PUEBLA, MEXICO, 1996,
- DATABASE WPI Section Ch, Week 199246 Derwent Publications Ltd., London, GB; Class D16, AN 1992-377558 XP002271957 & JP 04 278072 A (KANEBO LTD) 2 October 1992 (1992-10-02)
- DATABASE FSTA [Online] INTERNATIONAL FOOD INFORMATION SERVICE (IFIS), FRANFURT/MAIN, DE; 2000, SOARES M ET AL: "Fruity flavour production by Ceratocystis fimbriata grown on coffee husk in solid-state fermentation." XP002271955 Database accession no. 2000-00-b0966 & PROCESS BIOCHEMISTRY 35 (8) 857-861 2000 CORRESPONDENCE (REPRINT) ADDRESS, P. CHRISTEN, LAB. DE MICROBIOL., IRD, UNIV. DE PROVENCE, 13288 MARSEILLE CEDEX 09, FRANCE. FAX +33-491-82-8570. E-MAIL CHRISTEN(A)ESIL.UNIV-MRS.FR, 2000,
- DATABASE EMBASE [Online] ELSEVIER SCIENCE PUBLISHERS, AMSTERDAM, NL; 1 July 2003 (2003-07-01), HAUCK T ET AL: "Formation of 4-hydroxy-2,5-dimethyl-3[2H]-furanone by Zygosaccharomyces rouxii: Identification of an intermediate" XP002271956 Database accession no. EMB-2003291945 & APPLIED AND ENVIRONMENTAL MICROBIOLOGY 01 JUL 2003 UNITED STATES, vol. 69, no. 7, 1 July 2003 (2003-07-01), pages 3911-3918, ISSN: 0099-2240
- DATABASE WPI Section Ch, Week 198825 Derwent Publications Ltd., London, GB; Class D13, AN 1988-169864 XP002271958 & HU 44 914 A (TIMAR G) 30 May 1988 (1988-05-30)
- LEE K G; SHIBAMOTO T: "Analysis of volatile components isolated from Hawaiian green coffee beans (Coffea arabica L.)" FLAVOUR AND FRAGRANCE JOURNAL, vol. 17, 15 April 2002 (2002-04-15), pages 349-351, XP009031885
- SOARES M ET AL: "FRUITY FLAVOUR PRODUCTION BY CERATOCYSTIS FIMBRIATA GROWN ON COFFEE HUSK IN SOLID-STATE FERMENTATION" PROCESS BIOCHEMISTRY, XX, XX, vol. 35, no. 8, 2000, pages 857-861, XP001179854
- DATABASE FSTA [Online] INTERNATIONAL FOOD INFORMATION SERVICE (IFIS), FRANkFURT-MAIN, DE; 1997, HEE-JUN BAIK ET AL: "Studies on the aroma components of roasted and ground coffee." XP002284838 Database accession no. 97-1-06-h0159

## Description

### Field of the Invention

This invention relates to a soft drink or beverage, a beverage base and a process for making such a beverage or beverage base. In particular the invention relates to a beverage with a fermented coffee component.

### Background to the Invention

Ready-to-serve coffee-based beverages are becoming increasingly popular. Very often, these beverages contain milk solids or a whitener. Apart from providing a beverage having an appearance and taste similar to that of whitened coffee, the milk solids or whitener performs the function of masking some of the harsher flavors, which may arise in ready-to-drink coffee beverages. However, coffee beverages, which contain milk solids or a whitener, are perceived to be less refreshing than black coffee beverages. In addition coffee aroma rapidly deteriorates. This is due to reactions of aroma compounds with each other but also with the coffee solids in the extract, a phenomenon described in the scientific literature.

It is well known to use micro-organism such as yeast, lactic acid bacteria or acetic acid bacteria in the fermentation of food products to generate aroma in foods. Fermentation is generally used in the beverage industry in the production of alcoholic beverages and in order to develop the flavours of the beverage. Although fermentation has also been used for the generation of flavours primarily, some alcohol generation usually takes place.

A fermented coffee beverage is described in European Patent Application EP 0791296. It relates to a beverage based on fermented sugar-containing aqueous extracts of tea or coffee. Disclosed is a process for preparation of a fermented drink under simple conditions and in a relatively short preparation time allowing the production of a fermented drink in large quantities. The fermentation process makes use of a combination of yeast and bacteria. The beverage process has been found to develop small amount of alcohol. Although small, this is for certain application e.g. the in the production of soft drinks undesirable.

US 4,867,992 discloses a process for producing natural buttery flavour and winery flavour by fermenting a coffee substrate with yeast or bacterial strain. The objective of US 4,867,992 is to develop buttery aroma by fermentation to enhance the dairy notes of beverages, e.g. coffee. This type of aroma is not desirable for the present invention, as it does not provide a refreshing note to the beverage.

JP 04278072 relates to a yeast-fermented liquid coffee extract containing sugar. The final product contains about 0.2% alcohol. Non-alcoholic fermented coffee beverages could be obtained if the process employs aeration during the fermentation with the yeast. However this would result in stripping the aroma off, and a final product, which is low in coffee aroma.

There is a need for new product concepts in the category of soft drink and ready-to-serve coffee based beverages. In particular there is a need for new refreshing and stimulating drinks. There is also a need for a refreshing and stimulating beverage in which harsher flavours and aromas are reduced. The invention aims at providing such a product. The invention also aims at providing a beverage, which is stimulating and has a fresh aroma with reduced aroma change during storage. Further the invention aims at providing a fermented coffee beverage, which has a high level of coffee aroma.

The traditional fermented products in the beverage industry are alcoholic drinks. The present invention aims at providing an alternative beverage to alcoholic drinks.

The invention also aims at presenting beverage in a new format.

### Summary of the Invention

Accordingly, in one aspect, the invention provides claim 1 This beverage base can be used for preparing a carbonated beverage having appearance of certain types of beers.

The invention provides a new stimulating and refreshing beverage, which may be based on natural coffee only. The product of the invention is an attractive non-alcoholic beverage.

It is surprisingly found that the fruity and/or floral notes can be generated, thus providing a beverage with a unique aroma signature wherein harsh coffee aroma is balanced with the fruity and/or floral aroma notes. Further, it has surprisingly been found that it is possible to provide a beverage base comprising a fermented coffee component which has a modulated coffee aroma and which is a non-alcoholic drink while at the same time retaining the coffee character of the coffee component. The beverage is refreshing due to its unique aroma profile and stimulating due to the caffeine content in the beverage.

An additional advantage is that a beverage may be provided which although fermented does not comprise acetic acid in amounts higher than what was already in the coffee base. Thus, such beverage has not the some times unpleasant acidic taste found in some fermented beverages.

The coffee beverage base comprises less than 0.05 %, preferably less that 0.01% alcohol or no alcohol at all. Alcohol here refers to ethanol or ethyl alcohol.

Further, in the present context a coffee beverage "base" is a component, which can be used for making a beverage. For example, the coffee beverage base can typically be reconstituted e.g. by the addition of a cold or hot liquid in order to form the final beverage.

The fermentation according to the invention provides fruity and/or floral notes to the coffee aroma. The fruity and/or floral notes can be perceived in the headspace above a prepared beverage. The fruity and/or floral aroma is reflected in a new aroma profile in which several compounds are changed, and which give a shift in the overall perception of that beverage aroma. It has been found that aldehydes like 2 and 3-methylbutanal due to the fermentation are substantially completely converted into their corresponding alcohols, thiol compounds like methanethiol and furfurylthiol are converted into their corresponding thioacetates and diketones are largely reduced to their corresponding acetoins. The occurrence of these new compounds can be easily measured by conventional headspace analysis using Solid Phase Microextraction (SPME) sampling. The level of these compounds is preferable above 50% of the level of the compound that has been transformed, more preferable above 80%.

The coffee component is selected from the group consisting of coffee extract, coffee aroma, coffee extract from which a portion of coffee aroma has been removed. Coffee aroma is the volatile compounds of coffee grounds or coffee extracts. The coffee aroma is preferable an aqueous coffee aroma. The aqueous coffee aroma may be a distillate of coffee aroma compounds from coffee grounds or from coffee extracts or obtained by any other process known to the man skilled in the art of recovering aroma from natural sources and put in an aqueous media. For example the coffee aroma may be obtained from coffee pressing.
It has surprisingly been found that the coffee beverage base of the invention shows improved aroma stability compared to non-fermented products. It is believed that the coffee aroma compounds which are known to be highly reactive or unstable compounds are converted to less reactive or unreactive species or products stable under storage conditions due to the fermentation process.

The beverage base of the invention may be a liquid beverage concentrate e.g. a syrup, or a soluble beverage concentrate, e.g. in powder or tablet form.

The beverage according to the invention has the benefits of being both refreshing and stimulating, and improved stability upon storage. It is refreshing due to its unique aroma modulation and stimulating due to caffeine content in the beverage. However, if desired a beverage which is de-caffinated is also an option. Conventional de-caffeinating technologies may be employed for this purpose.

If desired the coffee beverage base could have foam properties to provide a foaming beverage upon preparation of the beverage. For example, the coffee beverage base may be gassed by injecting a gas such as air, nitrogen or carbon dioxide into it. Alternatively, the beverage may be gassed upon reconstitution. Conventional technology may be used for both purposes. The invention thus provides an attractive non-alcoholic alternative to beer. At the same time the invention provides a beverage, which is both refreshing and stimulating. In a particular preferred embodiment of the invention the beverage base when prepared for consumption comprises a foam upper surface. Preferably the beverage base or the beverage made from it is gassed or carbonated. Foam is then created when the beverage is poured into a glass to provide a beverage, which also visually assimilate beer. It can be poured like a beer; it looks like a beer, but also has the stimulating effect of coffee.

In another aspect, this invention provides claim 9.

The micro-organism used for the fermentation may be either a strain of lactic acid producing bacteria or yeast capable of producing fruity and/or floral notes. The coffee component is preferable selected from the group of coffee components discussed above. The temperature for fermentation must be below 22°C. It has been found that above 22°C the micro-organism, in particular yeast strains start to produce ethanol at a rate high enough to accumulate detectable levels during incubation period. This is particular undesirable for the products of the invention. Further details on the process of the invention are given below.

In a further embodiment, the invention relates to claim 13. Preferably the fermented coffee aroma also has a ratio of thioacetates over thiols being more than 0.5. A coffee aroma of this type may be used for aromatising coffee beverages and other beverages such as e.g. tea.

### Detailed Description of Preferred Embodiments of the Invention

Embodiments of the invention are now described, by way of example only.

The micro-organism used for the fermentation is either a strain of lactic acid producing bacteria or yeast capable of producing fruity and/or floral aroma notes.

Yeast has been found to be particular suitable for the present application. The preferred yeast is yeast which may develop a desirable fruity flavour and which are food grade. The yeast may preferable be selected from the group consisting of *Saccharomyces cerevisiae*, *S. bayanus*, *S. carlsbergensis*, *S. exiguus*, *S. uvarum*, *Kluyveromyces marxianus*, *K. lactis*, *Brettanomyces spp. Aureobasidium pullulans*, *Candida stellata*, *C*. *krusei*, *Cryptococcus*, *Hanseniaspora uvarum*, *H. osmophilia*, *Issatchenkia orientalis*, *Kloeckera spp*, *Kloeckera apiculata*, *Kloeckera javanica*, *Metschnikowia spp*., *Metschnikowia pulcherrima*, *Pichia spp*., *Pichia anomala*, *Saccharomycodes ludwigii*, *Zygosaccharomyces bailii* or a combination thereof.

The strength and type of fruity and/or floral aroma notes the microorganism is capable to impart during the fermentation varies depending on the microorganism and fermentation conditions chosen. Thus, if a particular strong modulation of the coffee aroma is desired certain micro organism may be selected for the fermentation.

As mentioned above the coffee component is selected from the group consisting of coffee extract, coffee aroma, coffee extract from which a portion of coffee aroma has been removed.

Coffee extract may be produced in conventional manner by subjecting roasted coffee beans to extraction. Any suitable extraction procedure may be used because the choice and design of the extraction procedure is a matter of preference and has no critical impact on a serving of the invention. Suitable extraction procedures are described in European patent applications 0 826 308 and 0 916 267, the discussion of which is incorporated by reference. Similarly, any suitable concentration procedure may be used because the choice and design of the concentration procedure is a matter of preference and has no impact on a serving of the invention. Of course, the coffee liquor may also be prepared by dissolving soluble coffee powder in water to the desired concentration.

In the production of soluble coffee, merely processing the roasted coffee beans to a coffee base concentrate as described above will result in the loss of substantially all coffee aroma. Therefore, it is preferred to specifically strip off and then collect the coffee aroma during processing. In this way, the coffee aroma is not lost. The coffee aroma for the purpose of this invention may be coffee aroma distillate originating from such a collection.

Processes for stripping off and collecting the coffee aroma are well known. Usually coffee aroma is stripped off at one or more stages, for example using an inert gas or steam during, or immediately after, grinding of the coffee beans and using steam to strip coffee aroma from the coffee extract during extraction.

Alternatively, the fresh coffee grounds may be slurried in water or coffee extract and the coffee aroma stripped from the slurry. A suitable procedure is described in International patent application PCT/EP99/00747, the disclosure of which is hereby incorporated as reference.

The coffee aroma may be captured using any suitable procedure. Ordinarily, the coffee aroma is captured by condensing it from the carrier gas in one or more condensers. Preferably, more than one condenser is used; each succeeding condenser being operated at a lower temperature than the previous condenser. If necessary or desired, one of the condensers may be a cryogenic aroma condenser. A suitable cryogenic aroma condenser is described in US patent 5,182,926; the disclosure of which is hereby incorporated as reference. The captured coffee aroma may, if desired, be concentrated using a suitable technique such as partial condensation or rectification. The captured coffee aroma may be combined with a suitable carrier substrate such as coffee oil or emulsion containing coffee oil or other fats. Aqueous coffee aroma components and organic coffee aroma components are then separated.

A beverage base according to the invention may comprise at least 0.2 % coffee solids by weight of the beverage base and at least 5 ppm fermented coffee aroma components by weight of the beverage base. It is preferred that the beverage base comprises between 0.01% and 2% coffee aroma, more preferably between 0.05 and 0.4% of coffee aroma by weight of coffee solids in the beverage base. This result in a beverage base which when reconstituted provides a beverage with a strong modulated coffee aroma with fruity and/or floral aroma notes. The coffee aroma of the beverage base is characterised by its unique aroma signature in which the concentration of aroma compounds has been significantly changed by the fermentation process as compared to the initial coffee aroma profile. This is shown below in Table 1 for 2 different yeast strains.

**Table 1:**

| | Change in aroma concentration [%] by fermentation relative to untreated coffee aroma distillate = | | | |
|---|---|---|---|---|
| Yeast | C20 | | EC1118 | |
| Sugar | Glucose | Fructose | Glucose | Fructose |
| dimethylsulfide | 102% | 102% | 95% | 84% |
| methylthioacetate | 576% | 563% | 477% | 416% |
| 2-methylbutanal | <1% | <1% | <1% | <1% |
| 3-methylbutanal | <1% | <1% | <1% | <1% |
| 2,3-pentanedione | 3% | 3% | 3% | 3% |
| 2-vinylfurane | 48% | 52% | 52% | 49% |
| N-methylpyrrole | 85% | 84% | 75% | 62% |
| pyridine | 28% | 18% | 16% | 17% |
| 2,6-dimethylpyrazine | 80% | 92% | 85% | 103% |
| 2-furfurylmethylsulfide | 67% | 66% | 73% | 73% |
| furfurylthiol | 1% | < 1% | 1% | 1% |
| furfurylthioacetate | 766% | 696% | 547% | 550% |
| N-furfurylpyrrole | 57% | 51% | 64% | 63% |
| 4-vinylguaiaool | 47% | 46% | 57% | 64% |

In a preferred embodiment of the invention the coffee aroma component is coffee aroma distillate.

In a preferred embodiment of the invention the beverage base comprising an aroma being characterised by its ratio of 2-and 3-methylbutanol over 2-and 3-methylbutanal being more than 1, preferably being more than 50. Furthermore, the aroma is characterised by its ration of thioacetates over thiols being more than 0.5, preferably more than 5. This provides a unique aroma profile to the coffee beverage.

For further aromatisation of the beverage base it may be desirable to add artificial aroma. Examples of aromas, which have been found to complement the beverage base, are aromas such as fruity, berries, honey, beer, fermented fruits or "eau de vie" flavours.

It will also be appreciated that the beverage base of the present invention may also be provided by using only artificial fermented coffee aromas.

Other ingredients may be added to the beverage base in addition to the liquid form the final beverage. Such ingredients are e.g. sugars and sugar substitutes, organic acids to modulate the taste perception and buffering salts like phosphates and their analogues.

In a specific embodiment of the invention the beverage base has foam properties to allow foam to be created on the upper surface of the beverage when prepared. The beverage according to the invention may be both carbonated, gassed or and plain beverages. In a particular preferred embodiment of the invention the beverage comprises foam such as "beer-like" appearance, colour, volume, texture and stability. The foam may be obtained by carbonation, gassing or by adding foaming agents to the beverage, and can be favoured by addition of surfactant such as saponin.

Fermentation of the beverage base may result in an opaque beverage. If this is considered undesirable the clear beverage may be subjected to centrifugation.

The fermentation process of the current invention also results in a conversion of Strecker aldehydes to corresponding alcohols and thiols (furfurylthiol, methylthiol) into thioacetates. It has been found that during storage test at 37°C these compounds were stable for several weeks whereas the aldehydes and thiols rapidly disappeared. Although Strecker alcohols and thioacetates may have somewhat different odour characteristics than the aldehydes and thiols they are originating from, coffee identity was maintained.

As mentioned above the fermentation of the coffee component takes place below 22°C to avoid the generation of alcohol. Further it is preferred that the fermentation temperature is above 8°C. It has been found that below 8°C many micro organisms e.g. yeast has a metabolic activity, which is so low that synthesis of new compounds, would require long incubation times.

According to the invention the development of alcohol during the fermentation can be inhibited in particular by controlling the temperature and duration of fermentation, selecting suitable yeast or bacterial strains and this allows the production of a beverage base, which comprises substantially no alcohol. Surprisingly, the fermented beverage obtains a particular desirable aroma under these process conditions. For example, a pleasant fruity and/or floral aroma, which in a pleasant way complement the coffee aroma.

Another advantage of the process of the invention is that it allows a fermented beverage to be generated in a relatively short fermentation process. Fermentation processes are generally known to be extensive due to long time the fermentation process takes e.g. in the range of 15 to 27 hours. The fermentation process of the present invention may take less than 8 hours, preferably less than 6 hours but more than 4 hours in order to avoid ethanol formation while allowing development of fruity aroma and conversion of some coffee aroma compounds.

The fermentation process of the invention is preferable carried out without aeration. Aeration results in a stripping off of the aroma compounds. It has been found that contrary to what has been conventional that the fermentation can be run satisfactory without aeration.

Advantageously the coffee component is supplemented with a carbohydrate effective to enhance the fermentation. For example sugar may advantageously be added to the coffee beverage base before fermentation. The sugar added e.g. to coffee extract has been found to have a substantial impact on the aroma production. In absence of sugar only a weak yeast aroma is generated. Preferably, at least 0.5 % of sugar is added based on the weight of the product to be fermented. More preferably, from 0.5 to 20 % of sugar is added. In the present context sugar is e.g. glucose, sucrose or fructose or a combination thereof, or any sugar that can be metabolised by the selected yeast strain.

The flavour and aroma character of the beverage base according to the invention may differ depending on which fermented coffee component is selected. Coffee extract with coffee aroma and coffee extract from which a portion of coffee aroma has been removed will have a more or less pronounced fruity and/or floral note due to the relatively amounts of coffee aroma in the extract. Further, the sweetness of the product will differ if the beverage base has been supplemented with carbohydrate, e.g. sugar as discussed above. The amounts of carbohydrates added preferably dependent on the volume to be fermented. Thus, the sweetness of the final beverage will depend on the amount of the beverage base that has been subjected to fermentation. For example, if only the coffee aroma distillate has been fermented, it constitutes relative small amount of the final beverage, which has been sweetened, and the final product will be less sweet. On the other hand more sugar will be present in a final beverage prepared from a beverage base being a coffee extract.

In a preferred embodiment the coffee beverage base of the invention only the coffee aroma distillate is fermented. This beverage base will provide for a less sweet final beverage compared to the beverage bases based on coffee extract. Further, this beverage base will be strong in fruit and/or flavour notes. More or less beverage base can be used in the final product to provide the desired strength of these components. Further, the sweetness of the product can be adjusted by simply adding more or less sweetener to the beverage base following the fermentation. This allow for a tailoring of the final coffee beverage product.

### A specific examples further illustrates the invention.

### Example 1 - Preparation of Coffee Beverage Base

Roasted coffee extract was prepared in conventional manner. Incubation the roasted coffee extract was incubated for 6-8 h with live yeast cells led to formation of pleasant fruity aromas. Neither ethanol nor acetic acid was formed. The vessel was not aerated in order to avoid foaming, and stripping of coffee and fermentation aromas.

Several *Saccharomyces cerevisiae* and *S*. *bayanus* strains were tested and *S. cerevisiae* Castelli Ceppo 20 was selected for further trials. The fermentation was success-fully performed at 200-L scale at PTC/Orbe with E1 coffee extract supplemented with 5% sucrose. During fermentation temperature was maintained at 20°C.

After bio-transformation, centrifugation, carbonation and pasteurisation, a beverage having desired characteristics of coffee flavour, dense foam and unique aroma signature was obtained. Several aromatic compound brought by yeast were identified and could be related to carbon metabolism and redox balance of the cells. Fermentation of coffee distillate led to generation of aroma, which was perceived after coffee reconstitution. By comparison fermentation of coffee base led to weaker aroma generation. Fermented coffee extract was successfully dried as powder after aroma stripping.

## Claims

1. A coffee beverage base comprising less than 0.05% ethanol; and comprising a fermented coffee component comprising coffee aroma, the coffee component being selected from the group consisting of coffee extract, coffee aroma, coffee extract from which a portion of coffee aroma has been removed; which fermented coffee component, has a modulated coffee aroma with fruity and/or floral notes due to the fermentation of the coffee aroma.

2. A beverage base according to claim 1, wherein the coffee aroma is a distillate of coffee aroma from coffee grounds or from coffee extracts.

3. A beverage base according to any of the preceding claims, which comprises at least 0.2 % coffee solids by weight of the beverage base.

4. A beverage base according to any of the preceding claims, which comprises between 0.01 % and 2% coffee aroma by weight of coffee solids in the beverage base.

5. A beverage base according to any of the proceeding claims wherein the beverage base is fermented.

6. A beverage base according to any of the proceeding claims, the beverage base comprising an coffee aroma being **characterised by** its ratio of 2-and 3-methylbutanol over 2-and 3-methylbutanal being more than 1.

7. A beverage base according to any of the proceeding claims, the beverage base comprising an coffee aroma being **characterised by** its ratio thioacetates over thiols being more than 0.5.

8. A beverage base according to any of the proceeding claims, wherein the beverage base is a liquid beverage concentrate or a soluble beverage concentrate.

9. A process for providing a coffee beverage base, the process comprising providing a coffee component comprising coffee aroma,
providing a micro-organism with an ability to ferment,
inoculating the coffee component with the micro-organism,
subjecting the incubated coffee component to fermentation at a temperature below 22°C to generate a fermented coffee component that has a fruity and/or floral note due to the fermentation of the coffee aroma, while controlling the fermentation conditions to substantially prevent the generation of alcohol and provide a coffee beverage base comprising less than 0.05% ethanol.

10. A process according to claim 9, comprising supplementing the coffee component with carbohydrate effective to enhance the fermentation process.

11. A process according to any of claims 9 or 10, wherein the fermentation temperature is between 5 and 22°C, preferably from 8 to 22°C.

12. A process according to any of claims 9 to 11, wherein the time of the fermentation is from 4 to 8 hours, preferably from 4 to 6 hours.

13. A fermented coffee aroma having fruity and/or floral notes due to the fermentation of the coffee aroma, wherein the aroma is **characterised by** its ratio of 2-and 3-methylbutanol over 2-and 3-methylbutanal being more than 1, and comprising less than 0.05% ethanol.

14. A fermented coffee aroma according to claim 13, wherein the coffee has a ratio of thioacetates over thiols being more than 0.5.

## Patentansprüche

1. Kaffeegetränkebasis, die weniger als 0.05% Ethanol umfasst und einen fermentierten Kaffeebestandteil, der Kaffeearoma umfasst, umfasst, wobei der Kaffeebestandteil aus der Gruppe gewählt ist, die aus Kaffeeextrakt, Kaffeearoma, Kaffeeextrakt, von dem ein Teil des Kaffeearomas entfernt worden ist, besteht, welche fermentierte Kaffeekomponente ein moduliertes Kaffeearoma mit fruchtigen und/oder floralen Noten aufgrund der Fermentierung des Kaffeearomas aufweist.

2. Getränkebasis nach Anspruch 1, worin das Kaffeearoma ein Destillat aus Kaffeearoma aus gemahlenem Kaffee oder Kaffeeextrakten ist.

3. Getränkebasis nach einem der vorangegangenen Ansprüche, die mindestens 0,2% Kaffeefeststoffe, bezogen auf das Gewicht der Getränkebasis, umfasst.

4. Getränkebasis nach einem der vorangegangenen Ansprüche, die zwischen 0.01 % und 2% Kaffeearoma, bezogen auf das Gewicht der Kaffeefeststoffe in der Getränkebasis, umfasst.

5. Getränkebasis nach einem der vorangegangenen Ansprüche, worin die Getränkebasis fermentiert ist.

6. Getränkebasis nach einem der vorangegangenen Ansprüche, worin die Getränkebasis ein Kaffeearoma umfasst, das durch sein Verhältnis von 2- und 3-Methylbutanol zu 2- und 3-Methylbutanal, das mehr als 1 beträgt, charakterisiert ist.

7. Getränkebasis nach einem der vorangegangenen Ansprüche, worin die Getränkebasis ein Kaffeearoma umfasst, das durch sein Verhältnis von Thioacetaten zu Thiolen, das mehr als 0,5 beträgt, charakterisiert ist.

8. Getränkebasis nach einem der vorangegangenen Ansprüche, worin die Getränkebasis ein flüssiges Getränkekonzentrat oder ein lösliches Getränkekonzentrat ist.

9. Verfahren zur Bereitstellung einer Kaffeegetränkebasis, wobei das Verfahren aufweist:
zur Verfügung stellen eines Kaffeebestandteils, der Kaffeearoma umfasst,
zur Verfügung stellen eines Mikroorganismus mit einer Fähigkeit zur Fermentation, Impfen des Kaffeebestandteils mit dem Mikroorganismus,
Unterwerfen des inkubierten Kaffeebestandteils einer Fermentation bei einer Temperatur unterhalb von 22°C, um eine fermentierte Kaffeekomponente, die eine fruchtige und/oder florale Note aufgrund der Fermentation des Kaffeearomas aufweist, zu erzeugen, während die Fermentationsbedingungen gesteuert werden, um im wesentlichen die Erzeugung von Alkohol zu verhindern und eine Kaffeegetränkebasis, die weniger als 0,05% Ethanol umfasst, bereitzustellen.

10. Verfahren nach Anspruch 9, das das Ergänzen des Kaffeebestandteils mit Kohlenhydrat, das zur Verstärkung des Fermentationsprozesses effektiv ist, umfasst.

11. Verfahren nach einem der Ansprüche 9 oder 10, worin die Fermentationstemperatur zwischen 5 und 22°C, bevorzugt 8 bis 22°C, beträgt.

12. Verfahren nach einem der Ansprüche 9 bis 11, worin die Dauer der Fermentation 4 bis 8 Stunden, bevorzugt 4 bis 6 Stunden, beträgt.

13. Fermentiertes Kaffeearoma mit fruchtigen und/oder floralen Noten aufgrund der Fermentation des Kaffeearomas, worin das Aroma durch sein Verhältnis von 2- und 3-Methylbutanol zu 2- und 3-Methylbutanal, das mehr als 1 beträgt, charakterisiert ist und welches weniger als 0,05% Ethanol umfasst.

14. Fermentiertes Kaffeearoma nach Anspruch 13, worin der Kaffee ein Verhältnis von Thioacetaten zu Thiolen, das mehr als 0,5 beträgt, aufweist.

## Revendications

1. Base de boisson au café contenant moins de 0,05% d'éthanol, et contenant un composant de café, fermenté, incluant un arôme de café, le composant de café étant choisi dans le groupe formé d'un extrait de café, d'un arôme de café, d'un extrait de café dont une partie de l'arôme de café a été enlevée ; lequel composant de café fermenté possède un arôme de café modulé avec des notes fruitées et/ou florales dues à la fermentation de l'arôme de café.

2. Base de boisson selon la revendication 1, dans laquelle l'arôme de café est un distillat d'arôme de café provenant de moutures de café ou d'extraits de café.

3. Base de boisson selon l'une quelconque des revendications précédentes, qui comprend au moins 0,2% de solides de café, par rapport au poids de la base de boisson.

4. Base de boisson selon l'une quelconque des revendications précédentes, qui comprend entre 0,01% et 2% d'arôme de café, par rapport au poids des solides de café dans la base de boisson.

5. Base de boisson selon l'une quelconque des revendications précédentes, dans laquelle la base de boisson est fermentée.

6. Base de boisson selon l'une quelconque des revendications précédentes, la base de boisson comprenant un arôme de café étant **caractérisée par le fait que** sa proportion de 2- et 3-méthylbutanol par rapport au 2- et 3-méthylbutanal est supérieure à 1.

7. Base de boisson selon l'une quelconque des revendications précédentes, la base de boisson comprenant un arôme de café étant **caractérisée par le fait que** sa proportion de thioacétates par rapport aux thiols est supérieure à 0,5.

8. Base de boisson selon l'une quelconque des revendications précédentes, dans laquelle la base de boisson est un concentré de boisson liquide ou un concentré de boisson soluble.

9. Procédé de fourniture d'une base de boisson au café, le procédé comprenant les étapes consistant à
fournir un composant de café comprenant un arôme de café,
fournir un microorganisme capable de produire une fermentation,
inoculer le microorganisme au composant de café,
soumettre le composant de café incubé à fermentation à une température inférieure à 22°C pour générer un composant de café fermenté qui possède une note fuitée et/ou florale due à la fermentation de l'arôme de café, tout en contrôlant les conditions de fermentation pour prévenir en substance la formation d'alcool et fournir une base de boisson au café contenant moins de 0,05% d'éthanol.

10. Procédé selon la revendication 9, comprenant l'étape consistant à compléter le composant de café par un glucide efficace pour renforcer le processus de fermentation.

11. Procédé selon l'une quelconque des revendications 9 ou 10, dans lequel la température de fermentation se situe entre 5 et 22°C, de préférence 8 et 22°C.

12. Procédé selon l'une quelconque des revendications 9 à 11, dans lequel la durée de la fermentation est de 4 à 8 heures, de préférence de 4 à 6 heures.

13. Arôme de café fermenté à notes fruitées et/ou florales dues à la fermentation de l'arôme de café, dans lequel l'arôme se **caractérise par** sa proportion de 2- et 3-méthylbutanol par rapport aux 2- et 3-méthylbutanal, qui est supérieure à 1, et contenant moins de 0,05% d'éthanol.

14. Arôme de café fermenté selon la revendication 13, dans lequel le café présente une proportion de thioacétates par rapport aux thiols supérieure à 0,5.
